# EUROPÄISCHE PATENTSCHRIFT

(11) **EP 3 665 382 B1**
(45) Veröffentlichungstag und Bekanntmachung des Hinweises auf die Patenterteilung: **04.03.2026**
(21) Anmeldenummer: 18755173.4
(22) Anmeldetag: 09.08.2018
(51) Int. Cl.: F02M 37/00, F02M 37/22, F02B 3/06, F02M 63/02

(54) **STEUEREINRICHTUNG**
CONTROL UNIT
UNITÉ DE COMMANDE

(30) Priorität: 11.08.2017 DE 102017007603
(43) Veröffentlichungstag der Anmeldung: 17.06.2020
(73) Patentinhaber: Hydac Fluidcarecenter GmbH, 66280 Sulzbach/Saar (DE)
(72) Erfinder: EBERLE, Richard, 66399 Ormesheim (DE); SCHOLL, Thomas, 66740 Saarlouis (DE); HAUPENTHAL, Jonas, 66606 St. Wendel (DE)
(74) Vertreter: Bartels und Partner, Patentanwälte
(86) Internationale Anmeldenummer: PCT/EP2018/071643
(87) Internationale Veröffentlichungsnummer: WO 2019/030332

(56) Entgegenhaltungen:
- EP-A1- 3 088 722
- EP-A2- 0 916 839
- WO-A1-02/01061
- WO-A1-2015/056045
- DE-A1- 102010 041 063
- JP-A- 2012 167 559
- US-A- 4 187 813
- US-A- 4 574 762

## Beschreibung

Die Erfindung betrifft eine Steuereinrichtung mit den Merkmalen im Oberbegriff von Anspruch 1.

Zur Kraftstoffversorgung von Brennräumen, insbesondere von selbstzündenden Verbrennungs-Kraftmaschinen, wie Dieselmotoren, können druckgesteuerte oder hubgesteuerte Kraftstoff-Einspritzeinrichtungen eingesetzt werden. Als Kraftstoff-Einspritzeinrichtungen kommen Pumpen-Düsen-Einrichtungen oder Pumpen-Leitungs-Einrichtungen, wie Speichereinspritzsysteme (Common-Rail), zum Einsatz. Derartige Common-Rail-Einspritzsysteme ermöglichen den Einspritzdruck an die jeweilige Last und die Drehzahl der betreffenden Verbrennungs-Kraftmaschine anzupassen. Zur Erzielung hoher spezifischer Leistungen derartiger Verbrennungs-Kraftmaschinen und zur Minimierung der Emissionen ist ein möglichst hoher Einspritzdruck angestrebt. Der Kraftstoff für derartige Kraftstoff-Einspritzeinrichtungen wird in an sich bekannter Weise mit Kraftstoff-Fördervorrichtungen von einem Kraftstofftank mit Hilfe einer Kraftstoffpumpe über eine Kraftstoffleitung zu einer Kraftstoff-Hochdruckquelle, in der Regel einer Kraftstoff-Hochdruckpumpe, gefördert. Dabei kann die Kraftstoff-Hochdruckquelle auch als Druckübersetzer gebildet sein. Die Kraftstoff-Hochdruckquelle wiederum beaufschlagt bei Common-Rail-Einspritz-einrichtungen eine Kraftstoff-Hochdruckleitung oder Hochdruckverteilerleiste, an der Kraftstoff-Injektoren zumindest in der Zahl der mit Kraftstoff zu versorgenden Brennräume fluidisch angebunden sind. Die Kraftstoff-Injektoren weisen auch jeweils einen Kraftstoffrücklauf auf, der über eine Rücklaufleitung zum Kraftstofftank führt.

Das Dokument DE 10 2011 009 035 A1 zeigt eine Fördervorrichtung der eingangs genanntenArt. Da bei derartigen Kraftstoff-Einspritz-einrichtungen, die Hochdruckspeicherleitungen, wie eine Common-Rail-Leitung, aufweisen, sehr kleine Drossel- und/oder Ventilöffnungsquerschnitte vorhanden sind, ist für eine einwandfreie dauerhafte Funktion der Kraftstoff-Injektoren die Filterung des Kraftstoffs unabdingbar. Wie sich gezeigt hat, besteht beim Betrieb der Fördervorrichtungen bei sehr niedrigen Temperaturen die Gefahr der Beeinträchtigung der einwandfreien Funktion der eingesetzten Filtereinrichtungen, insbesondere bei nicht absolut wasserfreien Kraftstoffen.

Die JP 2012-167559 A beschreibt eine Steuereinrichtung mit einem Gehäuse mit einer durchgehenden Fluidführung zwischen zwei Anschlussstellen, einer dritten Anschlussstelle sowie einem Verbindungsweg zwischen dieser dritten Anschlussstelle und der Fluidführung, einem Thermostatventil und einem Druckventil in dem Verbindungsweg.

Weitere Steuereinrichtungen sind aus der US 4 187 813, der US 4 574 762, der DE 10 2010 041 063 A1, der EP 3 088 722 A1, der WO 02/01061 A1, der WO 2015/056045 A1 und der EP 0 916 839 A2 bekannt.

Im Hinblick auf diese Problematik stellt sich die Erfindung die Aufgabe, eine Steuereinrichtung der eingangs genannten Art zur Verfügung zu stellen, die sich durch eine erhöhte Betriebssicherheit bei Tieftemperaturbetrieb auszeichnet.

Erfindungsgemäß ist diese Aufgabe durch eine Steuereinrichtung gelöst, die die Merkmale des Patentanspruchs 1 in seiner Gesamtheit aufweist.

Gemäß dem Kennzeichen von Anspruch 1 ist vorgesehen, dass das Thermostatventil ein federbelastetes Dehnstoffelement aufweist, das sich unterhalb einer vorgebbaren Schwellentemperatur, unterstützt von der Federkraft, verkürzt und einen Fluidweg zwischen Druckventil und der Fluidführung zwischen den beiden Anschlussstellen freigibt und ansonsten sperrt; und dass zur Steuerung eines Schließkörpers das Dehnstoffelement vorgesehen ist, das an einem Boden einer Mulde derart angeordnet ist, dass es sich durch den Boden mit einem Großteil seiner Länge in die Fluidführung hineinerstreckt und im Betrieb von dem über die erste Anschlussstelle einströmenden, von einem Tank kommenden Kraftstoff umströmt ist und dadurch auf dessen Temperatur anspricht.

Demgemäß weist die Steuereinrichtung ein Gehäuse mit einer durchgehenden Fluidführung zwischen zwei Anschlussstellen auf. Die Fluidführung bildet den Anfangsteil der Kraftstoff-Zulaufleitung der zugeordneten Fördervorrichtung, also den Leitungsbereich zwischen Kraftstofftank und einem Filter, insbesondere einem Vorfilter. Eine weitere, dritte Anschlussstelle bildet den Eingang eines Verbindungswegs zur Fluidführung, wobei sich ein Thermostatventil und ein Druckventil in diesem Verbindungsweg befinden.

Bei besonders vorteilhaften Ausführungsbeispielen ist das Druckventil ein federvorgespanntes Membranventil mit einer Rollmembran, das bei einem vorgebbaren Schwellendruck an der dritten Anschlussstelle öffnet und einen Fluidweg von dieser dritten Anschlussstelle zu dem im Verbindungsweg liegenden Thermostatventil freigibt.

Hinsichtlich des Aufbaus des Thermostatventils kann die Anordnung mit Vorteil so getroffen sein, dass zwischen dem Dehnstoffelement und einer zugehörigen Druckfeder für den Erhalt der Federkraft ein Ventilteller angeordnet ist, der in der Schließstellung des Thermostatventils den Fluidweg zwischen Druckventil und Fluidführung versperrt und in seiner Offenstellung freigibt.

Hinsichtlich der Ausgestaltung des Gehäuses kann die Anordnung mit Vorteil derart getroffen sein, dass der Fluidweg senkrecht zur Richtung der Fluidführung verläuft, dass das Gehäuse mehr-, insbesondere zweiteilig, ausgebildet ist und dass das eine Gehäuseteil das Thermostatventil mit der Fluidführung und den beiden Anschlussstellen aufweist und das andere Gehäuseteil das Druckventil mit der dritten Anschlussstelle aufweist.

Bei Zuordnung der Steuereinrichtung zu einer Kraftstoff-Fördereinrichtung sind die beiden ersten Anschlussstellen an die Fluidführung und die dritte Anschlussstelle an die Rücklaufleitung der Kraftstoff-Fördervorrichtung anschließbar.

Mit Vorteil kann die Steuereinrichtung als Anbauteil für eine Dieselfiltervorrichtung konzipiert sein, insbesondere als Anbauteil an einem Vorfilter, das in der Kraftstoff-Zulaufleitung zwischen Tank und Förderpumpe angeordnet ist.

Nachstehend ist die Erfindung anhand eines in der Zeichnung dargestellten Ausführungsbeispiels im Einzelnen erläutert. Es zeigen:
- Fig. 1: einen schematischen Schaltplan eines Ausführungsbeispiels einer Fördervorrichtung;
- Fig. 2: eine teilweise aufgeschnitten gezeichnete Seitenansicht eines Kraftstoff-Vorfilters der Fördervorrichtung mit angebauter, in schematisiertem Längsschnitt gezeichneter Steuereinrichtung gemäß der Erfindung;
- Fig. 3: eine perspektivische Schrägansicht des Vorfilters von Fig. 2 mit angebauter Steuereinrichtung;
- Fig. 4: einen Längsschnitt des Ausführungsbeispiels der erfindungsgemäßen Steuereinrichtung, wobei ein Betriebszustand bei über einem Schwellenwert liegender Temperatur gezeigt ist; und
- Fig. 5: einen der Fig. 4 entsprechenden Längsschnitt, wobei ein Betriebszustand bei unter einem Schwellenwert liegender Temperatur und bei in einer Kraftstoff-Rücklaufleitung herrschendem, über einem Schwellenwert liegendem Druck dargestellt ist.

Das in der beigefügten Zeichnung dargestellte Ausführungsbeispiel einer Fördervorrichtung ist zur Versorgung des Kraftstoff-Einspritzsystems 2 einer Diesel-Verbrennungskraftmaschine mit aus einem Tank 4 zuzuführendem Dieselkraftstoff vorgesehen. Das Einspritzsystem 2 ist beim gezeigten Beispiel als Common-Rail-System (CR) ausgebildet. Solche Speichereinspritzsysteme ermöglichen in vorteilhafter Weise den Einspritzdruck von Kraftstoff in betreffende Brennräume der Verbrennungskraftmaschine an Last und Drehzahlen der Verbrennungskraftmaschine anzupassen. In der Figur ist das Kraftstoff-Einspritzsystem 2 oder das Common-Rail-System vereinfacht mit einer Hochdruck-Verteilerleiste 6 gezeigt, an die vier Kraftstoff-Injektoren 8 fluidisch angebunden sind. In einer am Grund des Kraftstofftanks 4 angeschlossenen Zulaufleitung 10, die sich bis zur Verteilerleiste 6 des Einspritzsystems 2 erstreckt, sind in der Förderrichtung gesehen ein Kraftstoff-Vorfilter 12, eine Niederdruck-Förderpumpe 14, ein Hauptfilter 16 sowie eine Hochdruckquelle 18 eingefügt. Auf der Niederdruckseite des Einspritzsystems 2 ist zur Leckageabfuhr eine Rücklaufleitung 20 angeschlossen, die über ein Rückschlagventil 22 in den Tank 4 mündet. Das Rückschlagventil 22 ist derart vorgespannt, dass es bei einem in der Rücklaufleitung 20 herrschenden geringen Vorspanndruck zum Tank 4 hin öffnet.

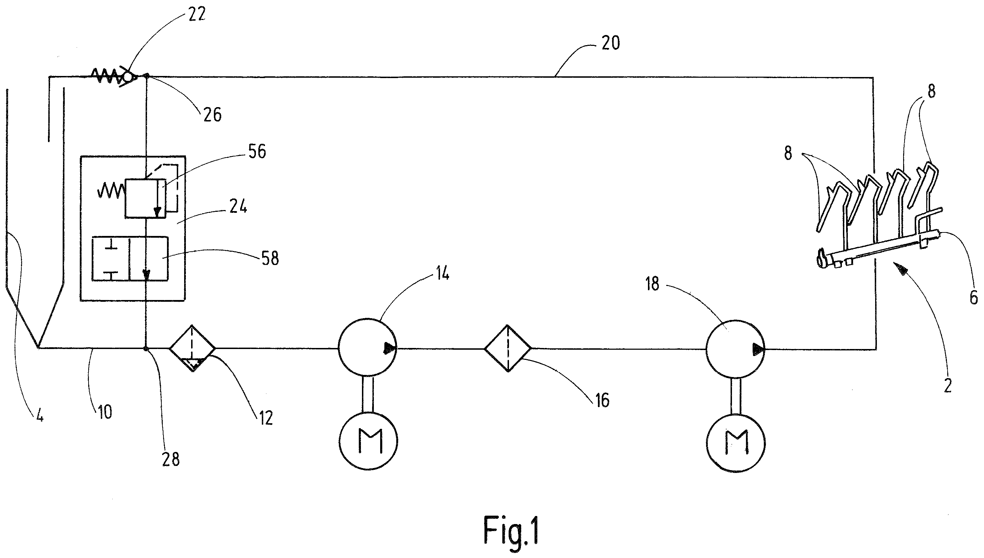

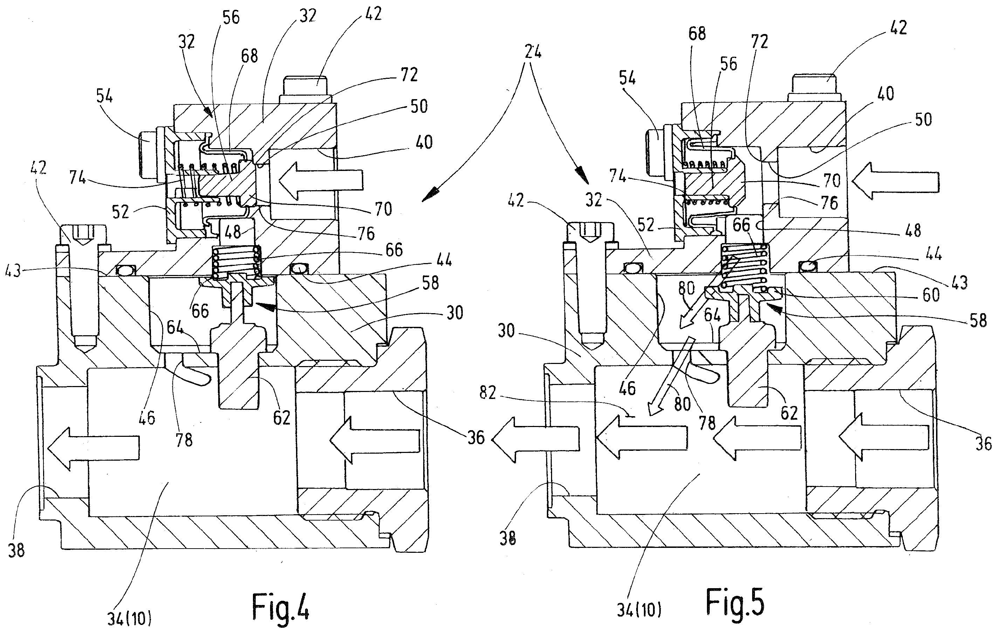

Eine Steuereinrichtung 24, die zwischen eine Stelle 26, die in der Rücklaufleitung 20 zwischen Rücklaufventil 22 und Einspritzsystem 2 gelegen ist, und eine Stelle 28 eingefügt ist, die sich an der Zulaufleitung 10 zwischen Tank 4 und Vorfilter 12 befindet, gibt bei bestimmten Betriebszuständen einen Verbindungsweg zwischen Rücklaufleitung 20 und der Zulaufleitung 10 frei. Die weiteren Figuren und von diesen insbesondere die Fig. 4 und 5 zeigen die Einzelheiten der in Fig. 1 lediglich in Symboldarstellung angedeuteten Steuereinrichtung 24. Die Steuereinrichtung 24 weist ein zweiteiliges Gehäuse mit einem Gehäusegrund- oder Hauptteil 30 und einem Gehäuseaufsatz 32 auf. Das Hauptteil 30 weist eine geradlinig durchgehende, in den Figuren horizontal verlaufende innere Fluidführung 34 zwischen einer ersten, eingangsseitigen Anschlussstelle 36 und einer zweiten, ausgangsseitigen Anschlussstelle 38 auf. Bei in die Fördervorrichtung integriertem Zustand bildet die Fluidführung 34 einen Leitungsabschnitt der Zulaufleitung 10 an der mit 28 bezeichneten Stelle. Dementsprechend ist die erste Anschlussstelle 36 mit dem Tank 4 und die zweite Anschlussstelle 38 mit dem Vorfilter 12 in Verbindung.

An dem Gehäuseaufsatz 32 befindet sich eine dritte Anschlussstelle 40, die an die Rücklaufleitung 20 an der in Fig. 1 mit 26 bezeichneten Stelle, also zwischen dem Rückschlagventil 22 und dem Einspritzsystem 2, angeschlossen ist. Der Gehäuseaufsatz 32 ist mittels Schrauben 42 mit der ebenflächigen Oberseite 43 des Gehäusehauptteils 30 verschraubt, wobei ein Dichtelement 44 zwischen Hauptteil 30 und Aufsatz 32 derart angeordnet ist, dass es eine kreiszylindrische Mulde 46 umgibt, die sich von der ebenen Oberseite 43 des Hauptteils 30 nach unten erstreckt. In diese Mulde 46 mündet ein im Gehäuseaufsatz 32 gebildeter Durchgang 48, der ebenfalls kreiszylindrisch ist, jedoch einen geringeren Durchmesser besitzt als die Mulde 46. Der in vertikaler Richtung verlaufende Durchgang 48 mündet mit seinem oberen Ende in einen horizontalen Eingangskanal 50, der die horizontale Fortsetzung des Eingangs der dritten Anschlussstelle 40 bildet. Auf der der dritten Anschlussstelle 40 entgegengesetzten Seite bildet ein Gehäuseeinsatz 52, der durch Schrauben 54 befestigt ist, den Verschluss des Eingangskanals 50.

Der Gehäuseeinsatz 52 bildet nicht nur das Verschlussteil, das den Eingangskanal 50 des Gehäuseeinsatzes 52 auf der von der dritten Anschlussstelle 40 abgewandten Seite nach außen hin abschließt, sondern enthält auch ein Druckventil 56, das den Fluiddurchgang zwischen dem Eingangskanal 50 und dem Durchgang 48 steuert, der vom Gehäuseaufsatz 32 zur Mulde 46 im Gehäusehauptteil 30 führt. Zur Steuerung der Fluidverbindung zwischen der Mündung des Durchgangs 48 und dem Innenraum der Mulde 46 im Gehäusehauptteil 30 ist ein Thermostatventil 58 vorgesehen, das einen innerhalb der Mulde 46 befindlichen, bewegbaren Schließkörper 60 besitzt, der bei der in Fig. 4 gezeigten Schließposition den Mündungsrand des Durchgangs 48 verschließt. Zur Steuerung des Schließkörpers 60 ist ein Dehnstoffelement 62 vorgesehen, das am Boden 64 der Mulde 46 derart angeordnet ist, dass es sich durch den Boden 64 mit einem Großteil seiner Länge in die Fluidführung 34 hinein erstreckt und im Betrieb von dem über die erste Anschlussstelle 36 einströmenden, vom Tank 4 kommenden Kraftstoff umströmt ist und dadurch auf dessen Temperatur anspricht. Das Dehnstoffelement 62 ist durch eine Druckfeder 66 derart vorgespannt, dass es bei einer unter einer Schwellentemperatur liegenden Temperatur den Schließkörper 60 in der in Fig. 5 gezeigten Öffnungsstellung hält. Bei über der Schwellentemperatur liegender Temperatur und dementsprechender Ausdehnung des Dehnstoffelements 62 kommt der Schließkörper 60 in die in Fig. 4 gezeigte Schließstellung.

Das Druckventil 56 ist ein Membranventil mit einer Rollmembran 68, die in Fig. 4 in ausgezogener und in Fig. 5 in eingerollter Position gezeigt ist. Bei der ausgezogenen Position (Fig. 4) befindet sich ein Schließteil 70 der Rollmembran 68 in dichter Anlage an einer Dichtkante 72, die sich an einem Absatz 76 des Eingangskanals 50 befindet, so dass dieser geschlossen ist. Die Rollmembran 68 mit dem Schließteil 70 ist durch eine Feder 74 in die in Fig. 4 gezeigte Schließstellung vorgespannt. Entsprechend der Wirkung der Feder 74 ist das Druckventil 56 auf einen an der Anschlussstelle 40 herrschenden Öffnungsdruck eingestellt, der unterhalb des Öffnungsdrucks des Rückschlagventils 22, jedoch oberhalb des Drucks liegt, der an der ersten Anschlussstelle 36 und damit im Tank 4 herrscht.

Das Thermostatventil 58 ist so ausgelegt, dass das Dehnstoffelement 62 bei einer in der Fluidführung 34, und damit im Tank 4, herrschenden vorgebbaren Temperatur den Schließkörper 60 gegen die Kraft der Feder 66 in die in Fig. 4 gezeigte Schließposition drückt, dass die Feder 66 bei Temperaturen, die demgegenüber geringer sind, den Schließkörper 60 aber in die in Fig. 5 gezeigte Offenstellung bewegt. Die jeweiligen Temperaturbereiche des Dehnelementes können kundenabhängig respektive aufgabenspezifisch variieren. Bei diesem in Fig. 5 gezeigten Betriebszustand mit durch den in der Rücklaufleitung 20 über die Anschlussstelle 40 wirkenden Druck geöffnetem Druckventil 56 ist über den Durchgang 48, das geöffnete Thermostatventil 58 und eine im Boden 64 der Mulde 46 befindliche Öffnung 78 ein Verbindungsweg gebildet, über den, wie mit Strömungspfeilen 80 angedeutet, erhitztes Leckagefluid aus der Rücklaufleitung 20 als Zusatzmenge zum Volumenstrom in der Fluidführung 34 gelangt. Bei dem dem Öffnungsdruck des Druckventils 56 entsprechenden geringen Überdruck gegenüber dem Tankdruck erfolgt dadurch eine Einspeisung der Zusatzmenge in eine in Fig. 5 mit 82 bezeichnete Mischzone, in der die Zusatzmenge durch Wärmeeintrag eine Erwärmung des über die Anschlussstelle 38 zum Vorfilter 12 gelangenden Volumenstroms bewirkt.

Insbesondere durch das Druckventil 56 wird verhindert, dass in der Rücklaufleitung ein Saugdruck entsteht. Dies dient zum Schutz der Hochdruckpumpe. Ferner ist das Druckventil 56 bevorzugt so aufgebaut, dass eine Seite zur Atmosphäre (Umgebung) hin geöffnet ist, was einen Druckausgleich erlaubt. Die Rollmembran 68 kann dabei von einem Druckausgleichselement vor Schmutzeintrag geschützt sein.

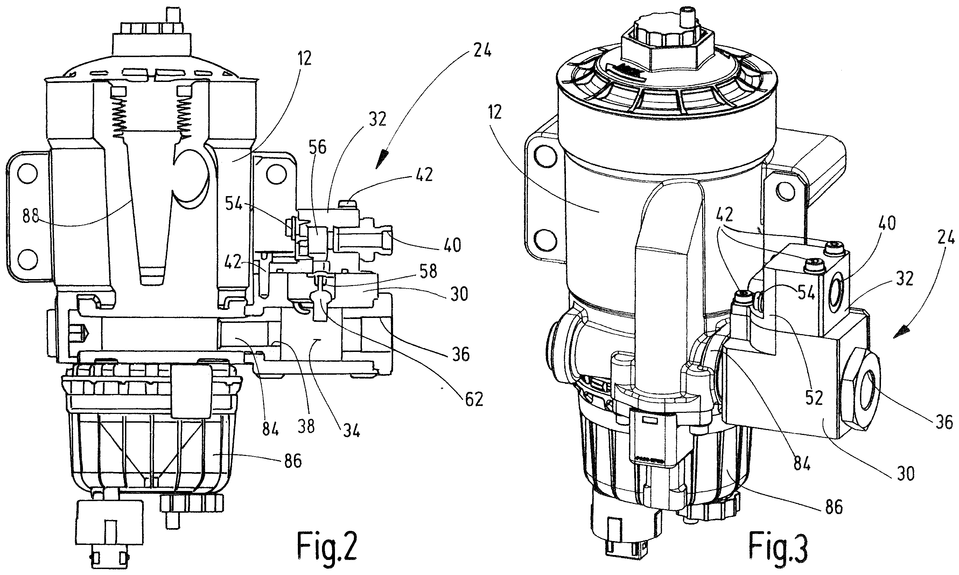

Wie die Fig. 2 und 3 zeigen, ist die Steuereinrichtung 24 in Form einer aus Gehäusehauptteil 30, Gehäuseaufsatz 32 und Gehäuseeinsatz 52 gebildeter Baueinheit unmittelbar am Fluideingang 84 des Vorfilters 12 angebracht. Bei dem gezeigten, vorteilhaften Ausführungsbeispiel weist dessen Filtermedium 88 eine Koaleszerlage auf, die bei nicht völlig wasserfreiem Kraftstoff eine Abscheidung bewirkt, wobei abgeschiedenes Wasser in einen im Bodenbereich des Filtergehäuses befindlichen Sammelraum 86 abtropft.

## Patentansprüche

1. Steuereinrichtung mit
- einem Gehäuse (30, 38) mit einer durchgehenden Fluidführung (34) zwischen zwei Anschlussstellen (36, 38),
- einer dritten Anschlussstelle (40) sowie einem Verbindungsweg (50, 48, 78) zwischen dieser dritten Anschlussstelle (40) und der Fluidführung (34),
- einem Thermostatventil (58) und
- einem Druckventil (56) in dem Verbindungsweg (50, 48, 78),
**dadurch gekennzeichnet,**
**dass** das Thermostatventil (58) ein federbelastetes Dehnstoffelement (62) aufweist, das sich unterhalb einer vorgebbaren Schwellentemperatur, unterstützt von der Federkraft (66), verkürzt und einen Fluidweg (48) zwischen Druckventil (56) und der Fluidführung (34) zwischen den beiden Anschlussstellen (36, 38) freigibt und ansonsten sperrt; und
**dass** zur Steuerung eines Schließkörpers (60) das Dehnstoffelement (62) vorgesehen ist, das an einem Boden (64) einer Mulde (46) derart angeordnet ist, dass es sich durch den Boden (64) mit einem Großteil seiner Länge in die Fluidführung (34) hineinerstreckt und im Betrieb von dem über die erste Anschlussstelle (36) einströmenden, von einem Tank (4) kommenden Kraftstoff umströmt ist und dadurch auf dessen Temperatur anspricht.

2. Steuereinrichtung nach Anspruch 1, **dadurch gekennzeichnet, dass** das Druckventil ein federvorgespanntes Membranventil (56) mit einer Rollmembran (68) ist, das bei einem vorgebbaren Schwellendruck an der dritten Anschlussstelle (40) öffnet und einen Fluidweg (50) von dieser dritten Anschlussstelle (40) zu dem im Verbindungsweg (50, 48, 78) liegenden Thermostatventil (58) freigibt.

3. Steuereinrichtung nach Anspruch 1 oder 2, **dadurch gekennzeichnet, dass** bei dem Thermostatventil (58) zwischen dem Dehnstoffelement (62) und einer zugehörigen Druckfeder (66) für den Erhalt der Federkraft ein Ventilteller (60) angeordnet ist, der in der Schließstellung des Thermostatventils (58) den Fluidweg (48) zwischen Druckventil (56) und Fluidführung (34) versperrt und in seiner Offenstellung freigibt.

4. Steuereinrichtung nach einem der Ansprüche 1 bis 3, **dadurch gekennzeichnet, dass** der Fluidweg (48) senkrecht zur Richtung der Fluidführung (34) verläuft, dass das Gehäuse (30, 32) mehr-, insbesondere zweiteilig, ausgebildet ist und dass das eine Gehäuseteil (30) das Thermostatventil (58) mit der Fluidführung (34) und den beiden Anschlussstellen (36, 38) aufweist und das andere Gehäuseteil (32) das Druckventil (56) mit der dritten Anschlussstelle (40) aufweist.

5. Steuereinrichtung nach einem der Ansprüche 1 bis 4, **dadurch gekennzeichnet, dass** die ersten beiden Anschlussstellen (36, 38) an die Fluidführung (34) und die dritte Anschlussstelle (40) an die Rücklaufleitung (20) einer Kraftstoff-Fördervorrichtung anschließbar sind.

6. Steuereinrichtung nach einem der Ansprüche 1 bis 5, **dadurch gekennzeichnet, dass** sie als Anbauteil für eine Dieselfiltervorrichtung (12) konzipiert ist.

## Claims

1. Control device having
- a housing (30, 38) with a through fluid passage (34) between two ports (36, 38),
- a third port (40) and a connecting path (50, 48, 78) between this third port (40) and the fluid passage (34),
- a thermostatic valve (58) and
- a pressure valve (56) in the connecting path (50, 48, 78),
**characterised in that**
the thermostatic valve (58) comprises a spring-loaded expansion element (62), which becomes shorter below a predefinable threshold temperature, supported by spring force (66), and releases and otherwise blocks a fluid path (48) between pressure valve (56) and the fluid passage (34) between the two ports (36, 38); and
that the expansion element (62) is provided in order to control a closing body (60), said expansion element being arranged on a base (64) of a hollow (46) such that it extends through the base (64) with a large part of its length into the fluid passage (34) and the fuel originating from a tank (4) and flowing in via the first port (36) flows around said expansion element during operation and the expansion element responds to the temperature of said fuel as a result.

2. Control device according to claim 1, **characterised in that** the pressure valve is a spring-preloaded diaphragm valve (56) with a rolling diaphragm (68), which opens in the event of a predefinable threshold pressure at the third port (40) and releases a fluid path (50) from this third port (40) to the thermostatic valve (58) located in the connecting path (50, 48, 78).

3. Control device according to either claim 1 or claim 2, **characterised in that** a valve disc (60) is arranged in the thermostatic valve (58) between the expansion element (62) and an associated compression spring (66) for receiving the spring force, said valve disc blocking the fluid path (48) between pressure valve (56) and fluid passage (34) in the closed position of the thermostatic valve (58) and opening it in its open position.

4. Control device according to any of claims 1 to 3, **characterised in that** the fluid path (48) runs perpendicular to the direction of the fluid passage (34), **in that** the housing (30, 32) is configured in multiple parts, in particular two parts, and **in that** one housing part (30) comprises the thermostatic valve (58) with the fluid passage (34) and the two ports (36, 38) and the other housing part (32) comprises the pressure valve (56) with the third port (40).

5. Control device according to any of claims 1 to 4, **characterised in that** the first two ports (36, 38) can be connected to the fluid passage (34) and the third port (40) can be connected to the return line (20) of a fuel delivery apparatus.

6. Control device according to any of claims 1 to 5, **characterised in that** it is designed as an add-on part for a diesel filter apparatus (12).

## Revendications

1. Dispositif de commande comprenant
- une enveloppe (30, 38) ayant une conduite (34) de fluide continue entre deux points (36, 38) de raccordement,
- un troisième point (40) de raccordement, ainsi qu'un chemin (50, 48, 78) de communication entre ce troisième point (40) de raccordement et la conduite (34) de fluide,
- une soupape (58) thermostatique et
- une soupape (56) de commande de la pression dans le chemin (50, 48, 78) de communication,
**caractérisé**
**en ce que** la soupape (58) thermostatique a un élément (62) en matière d'allongement, soumis à l'action d'un ressort, qui, en dessous d'une température de seuil pouvant être donnée à l'avance, se raccourcit en étant soutenue par la force (66) du rotor et dégage un chemin (48) pour du fluide entre la soupape (56) de commande de réglage de la pression et la conduite (34) pour du fluide entre les deux points (36, 38) de raccordement et sinon le barre ; et
**en ce que** l'élément (62) en matière d'allongement est prévu pour la commande d'un obturateur (60), qui est disposé sur un fond (64) d'une auge (46), de manière à ce qu'il pénètre à travers le fond (64) pour une grande partie de sa longueur dans la conduite (34) pour du fluide, et soit, en fonctionnement, léché par du carburant entrant par le premier point (36) de raccordement et venant d'un réservoir (4) et réagisse ainsi à sa température.

2. Dispositif de commande suivant la revendication 1, **caractérisé en ce que** la soupape de réglage de la pression est une soupape (56) à membrane précontrainte par un ressort ayant une membrane (68) enroulée, qui ouvre sur le troisième point (40) de raccordement à une pression de seuil pouvant être donnée à l'avance et dégage un chemin (50) de fluide de ce troisième point (40) de raccordement à la soupape (58) thermostatique se trouvant dans le chemin (50, 48, 78) de communication.

3. Dispositif de commande suivant la revendication 1 ou 2, **caractérisé en ce qu'**à la soupape (58) thermostatique, est disposé, entre l'élément (62) en matière d'allongement et un ressort (66) de compression, qui lui appartient, pour le maintien de la force de ressort, un plateau (60) de soupape, qui, dans la position de fermeture de la soupape (58) thermostatique, barre le chemin (48) de fluide entre la soupape (56) de réglage de la pression et la conduite (34) pour du fluide et le dégage dans sa position d'ouverture.

4. Dispositif de commande suivant l'une des revendications 1 à 3, **caractérisé en ce que** le chemin (48) pour du fluide s'étend perpendiculairement à la direction de la conduite (34) pour du fluide, **en ce que** l'enveloppe (30, 32) est constituée en plusieurs, en particulier en deux parties, et **en ce que** la une partie (30) de l'enveloppe a la soupape (58) thermostatique avec le conduit (34) pour le fluide et les deux points (36, 38) de raccordement et l'autre partie (32) de l'enveloppe a la soupape (56) de réglage de la pression avec le troisième point (40) de raccordement.

5. Dispositif de commande suivant l'une des revendications 1 à 4, **caractérisé en ce que** les deux premiers points (36, 38) de raccordement peuvent être raccordés à la conduite (34) pour du fluide et le troisième point (40) de raccordement au conduit (20) de retour d'un dispositif de transport de carburant.

6. Dispositif de commande suivant l'une des revendications 1 à 5, **caractérisé en ce qu'**il est conçu en pièce rapportée pour un dispositif (12) de filtre diesel.
